# EUROPÄISCHE PATENTSCHRIFT

(11) **EP 4 105 506 B1**
(45) Veröffentlichungstag und Bekanntmachung des Hinweises auf die Patenterteilung: **17.12.2025**
(21) Anmeldenummer: 22178211.3
(22) Anmeldetag: 09.06.2022
(51) Int. Cl.: F16C 33/50, F16C 33/54, F16C 19/22

(54) **KÄFIGSEGMENT FÜR EINEN ROLLENLAGERKÄFIG**
CAGE SEGMENT FOR A ROLLER BEARING CAGE
SEGMENT DE CAGE POUR UNE CAGE DE PALIER À ROULEAUX

(30) Priorität: 18.06.2021 DE 102021206284
(43) Veröffentlichungstag der Anmeldung: 21.12.2022
(73) Patentinhaber: Aktiebolaget SKF, 415 50 Göteborg (SE)
(72) Erfinder: Beyfuss, Berthold, 97535 Wasserlosen-Kaisten (DE); Friedrich, Hans-Jürgen, 97486 Königsberg-Römershofen (DE); Radina, Alfred, 97711 Poppenlauer (DE); Schierling, Jonas, 97437 Hassfurt (DE); Soellner, Maximilian, 97494 Bundorf (DE)
(74) Vertreter: Kuhstrebe, Jochen

(56) Entgegenhaltungen:
- EP-A1- 2 213 894
- DE-B4- 102009 004 657

## Beschreibung

Vorliegende Erfindung betrifft ein Käfigsegment für einen Wälzlagerkäfig gemäß dem Oberbegriff von Patentanspruch 1. Vorliegende Erfindung betrifft des Weiteren einen Wälzlagerkäfig mit einer Mehrzahl von Käfigsegmenten gemäß Patentanspruch 11 und ein Wälzlager gemäß Patentanspruch 12.

Wälzkörper in Wälzlagern können beispielsweise durch Wälzlagerkäfige geführt und gehalten werden. Dies kann nicht nur im Betrieb des Wälzlagers von Nutzen sein, sondern auch bei dem Zusammenbau des Wälzlagers. Es ist bekannt, dass Wälzlagerkäfige zum einen aus Metall durch verschiedene Herstellungsverfahren und zum anderen aus einem Kunststoff, beispielsweise durch ein Spritzgussverfahren, hergestellt werden können. Aufgrund des Temperaturverhaltens und der benötigten Festigkeit des Materials kann es notwendig sein, insbesondere einen glasfaserverstärkten Kunststoff, wie zum Beispiel glasfaserverstärktes PEEK, zu verwenden. Allerdings können gerade bei Großlagern diese Wälzlagerkäfige allein schon durch die benötigten Materialmengen, insbesondere bei Kunststoffen mit einem hohen Kilogrammpreis, sehr teuer werden. Meist werden größere Metallkäfige dadurch gefertigt, indem Vollmaterial zunächst gewalzt und dann spanend weiterbearbeitet wird. Dabei ist den bekannten Verfahren gemein, dass sie einerseits einen hohen Materialeinsatz erfordern, und anderseits eine Kombination von mehreren, zum Teil aufwendigen Herstellungsverfahren mit unterschiedlichen Werkzeugmaschinen erfordern, so dass die Herstellung aufwendig und/oder kostenintensiv sein kann.

DE 10 2009 004 657B4 beschreibt einen Wälzlagerkäfig, der zwei Seitenringe aufweist, zwischen denen eine Anzahl Stege angeordnet sind, so dass zwischen zwei benachbarten Stegen eine Aufnahmetasche für ein Wälzelement gebildet wird, wobei die Seitenringe aus einer Anzahl Seitenringsegmenten mittels einer formschlüssigen Verbindung verbunden ist. DE 10 2009 004 657B4 offenbart ein Käfigsegment nach dem Oberbegriff des Anspruchs 1.

EP 2 213 894 A1 beschreibt einen Wälzlagerkäfig eines Wälzlagers, der ein ringartiges Umfangselement umfasst, von dem Stegelemente abzweigen, zwischen denen Wälzkörper des Wälzlagers anordenbar sind, wobei das Umfangselement eine Mehrzahl gleichartiger Sektorelemente umfasst. Jedes der Sektorelemente weist wenigstens einen Vorsprung auf, der mit wenigstens einer korrespondierenden seitlichen Ausnehmung eines der Wälzkörper des Wälzlagers lose in Eingriff bringbar ist, wobei die zunächst losen Sektor- und Stegelemente zum Bilden des Käfigs miteinander verbunden sind.

Es ist deshalb Aufgabe vorliegender Erfindung, ein Käfigsegment für einen Wälzlagerkäfig bereitzustellen, der einfach und kostengünstig hergestellt werden kann.

Diese Aufgabe wird durch ein Käfigsegment für einen Wälzlagerkäfig gemäß Patentanspruch 1, einen Wälzlagerkäfig gemäß Patentanspruch 11 und ein Wälzlager gemäß Patentanspruch 12.

Im Folgenden wird ein Käfigsegment für einen Wälzlagerkäfig, insbesondere für Großwälzlager bereitgestellt. Das Käfigsegment kann insbesondere ein Käfigsegment für ein Rollenlager sein, d.h. ein Wälzlager mit rollenförmigen Wälzkörpern, wie zum Beispiel Kegelrollen, Zylinderrollen, Tonnen, Nadeln, und dergleichen. Weiterhin umfasst das Käfigsegment eine taschenförmige Aufnahme zur Aufnahme eines Wälzkörpers, wobei die Aufnahme auf zumindest einer Seite mit einem Profilhalbzeug begrenzt ist. Bevorzugt hat das Profilhalbzeug zumindest eine sich längserstreckende Ausnehmung. Außerdem kann das Profilhalbzeug aus Metall, insbesondere aus Leichtmetall, bevorzugt aus Aluminium, hergestellt sein. Die Verwendung eines Leichtmetalls hat den Vorteil, dass das Käfigsegment leichter ist. Bei einem Großwälzlager kann es sich insbesondere um ein Wälzlager mit einem Durchmesser von mehr als einem Meter handeln.

Bei dem Käfigsegment kann es sich um ein Einzelsegment oder um ein Mehrfachsegment handeln. In einem Einzelsegment kann jeweils ein Wälzkörper aufgenommen werden. Unter einem Mehrfachsegment wird ein Käfigsegment verstanden, das mehrere Wälzkörper aufnehmen kann. Hierzu können in dem Käfigsegment mehrere Taschen gebildet sein, wobei in einer Tasche zumindest ein Wälzkörper aufgenommen werden kann. Profilhalbzeug kann einfach und kostengünstig als Meterware erworben werden und auf das gewünschte Maß abgelängt werden. Dadurch kann eine aufwendige maschinelle Bearbeitung, wie beispielsweise Schneiden und Biegen und insbesondere auf ein zerspanendes Bearbeitungsverfahren, verzichtet werden. Dadurch kann das Käfigsegment mit einem geringen Materialeinsatz und/oder einem hohen Materialausnutzungsgrad und damit kostengünstig, insbesondere auch bei kleinen Stückzahlen, erhalten werden.

Gemäß einer bevorzugten Ausführungsform weist das Profilhalbzeug zumindest ein erstes Seitenelement und ein zweites Seitenelement auf, wobei ein Verbindungselement vorgesehen ist, das dazu ausgelegt ist, das erste Seitenelement und das zweite Seitenelement miteinander zu verbinden. Das Verbindungselement ermöglicht nicht nur einzelne Seiten des Käfigsegments aus Profilhalbzeug herzustellen, sondern auch mehrere Elemente aus Profilhalbzeug zu verbinden.

Bevorzugt ist die Aufnahme vollständig aus einem Profilhalbzeug gebildet. Insbesondere können die verschiedenen Profilhalbzeuge, die benötigt werden, um die Aufnahme zu bilden, mittels Verbindungselementen verbunden sein. Auch kann das Käfigsegment selbst vollständig aus Profilhalbzeug gebildet sein. Die Verwendung von Profilhalbzeug hat auch den Vorteil, dass die einzelnen Seitenelemente, aus denen das Käfigelement zusammengesetzt ist, standardisierbar sind. Dies ermöglicht auch, ein Baukastenprinzip für Käfigsegmente bereitzustellen, aus dem jedes Käfigsegment individuell zusammengesellt werden kann. Dies ist insbesondere bei kleinen Stückzahlen vorteilhaft. Außerdem kann durch die Verwendung eines Baukastenprinzips für Käfigsegmente, eine Zeit, die bis zur Marktreife eines Käfigsegments, eines Wälzlagerkäfigs und/oder eines Wälzlagers benötigt werden, reduziert werden.

Gemäß der beanspruchten Erfindung, ist zumindest ein Element vorgesehen ist, das dazu ausgelegt ist, mit einem Kopplungselement zusammenzuwirken, wobei das Element ferner dazu ausgebildet ist, an dem Profilhalbzeug lösbar befestigbar zu sein. Als Alternative (nicht beansprucht) kann das Element auch vorgesehen dazu ausgelegt sein, mit dem Wälzkörper und/oder einem Bord des Wälzlagerkäfig und/oder einer Laufbahn des Wälzlagerkäfig wobei das Element ferner dazu ausgebildet ist, an dem Profilhalbzeug lösbar befestigbar zu sein. Beispielsweise kann das Element mittels der zumindest eine längserstreckende Ausnehmung des Profilhalbzeugs an dem Profilhalbzeug befestigbar sein. Ferner kann das zumindest eine Element aus dem gleichen Material wie das Profilhalbzeug hergestellt sein oder aus einem anderen Material, wie beispielsweise Kunststoff, hergestellt sein. Insbesondere kann dadurch das für das Element verwendete Material an die beabsichtigte Funktion des Elements angepasst werden. Des Weiteren kann das zumindest eine Element, abhängig von seinem beabsichtigten Einsatz, mit einer Profilierung und/oder Texturen versehen sein. Ferner kann durch die lösbare Befestigung des Elements ermöglicht werden, dass das Element gewartet werden kann. Beispielsweise kann das Element bei einer Wartung des Wälzlagers im Falle eines Verschleißes einfach ausgetauscht werden.

Bevorzugt ist das Element an einer der Aufnahme zugewandten Seite und/oder abgewandten Seite und/oder an einer der Drehachse des Wälzlagerkäfigs zugewandten und/oder abgewandten Seite vorgesehen ist. Insbesondere kann die Position, an der das zumindest eine Element angeordnet ist, abhängig von der beabsichtigten Funktion ausgewählt werden. Gemäß einer weiteren Ausführungsform ist das zumindest eine Element mittels zumindest eines Befestigungsmittels an dem Profilhalbzeug befestigbar. Bevorzugt ist das Befestigungsmittel ein Distanzstück, das in die zumindest eine längserstreckende Ausnehmung des Profilhalbzeugs einsetzbar ist, und/oder eine Schraube. Beispielsweise kann das zumindest eine Element derart zwischen zumindest zwei Distanzstücken in der zumindest einen längserstreckenden Ausnehmung angeordnet sein, dass das Element in Position gehalten werden kann. Ferner können verschiedene Distanzstücke vorgesehen sein, die sich voneinander in ihrer Länge unterscheiden. Dadurch kann auf einfache Weise die Positionierung des Elements an dem Käfigsegment angepasst werden, indem ein Distanzstück mit einer anderen Länge eingesetzt wird.

Gemäß der beanspruchten Erfindung, ist das Element zumindest ein Führungselement ist, das dazu ausgebildet ist, das Käfigsegment auf einer Wälzkörperlaufbahn und/ oder an einem Bord zu führen, oder zumindest ein Kopplungselement ist, das dazu ausgebildet ist, mit einem Kopplungsmittel zusammenzuwirken, um das Käfigsegment mit zumindest einem weiteren Käfigsegment zu verbinden. Als Alternative (nicht beansprucht) kann das Element auch ein Haltelement für einen Wälzkörper sein, das dazu ausgebildet ist, den Wälzkörper zu halten, und/oder zumindest ein Führungselement ist, das dazu ausgebildet ist, das Käfigsegment an einer Wälzkörper zu führen.

Durch Änderung der Positionierung des Halteelements an dem Käfigsegment kann, beispielsweise bei einem Käfigsegment für ein Kegelrollenlager, ein Endspiel im Lager, das zum Beispiel durch eine Toleranzaddierung auftreten kann, ausgeglichen werden, indem das Halteelement in der axialen Richtung verschoben wird. Dies kann beispielsweise, wie oben erwähnt, durch Distanzstücke mit unterschiedlichen Längen erreicht werden. Mit anderen Worten kann, insbesondere bei einem Kegelrollenlager das Endspiel im Lager, das vorteilhafterweise in einem vorgegebenen Bereich liegt, aber aufgrund der Addierung der Fertigungstoleranz nicht bei allen Lagern gleich ist, entsprechend einstellen werden. Insbesondere kann durch das Verschieben des Halteelements der Abstand bzw. das Spiel zu der einzelnen Kegelrolle durch die Änderung des Anlagepunkts aufgrund der Kegelform geändert werden.

Die Käfigsegmente können durch das Kopplungsmittel zusätzlich zusammengehalten werden, wodurch der Käfigverbund an Stabilität gewinnt und/oder eine Montage des Käfigs vereinfacht werden kann. Durch das Kopplungsmittel, welches beispielsweise ein Seil, Draht oder ein Ring sein kann und eine definierte Vorspannung hat, können die Käfigsegmente geführt werden.

Bevorzugt kann das Kopplungselement als Öse ausgebildet sein, durch die das Kopplungsmittel durchfädelbar ist. Bei einer Ausgestaltung des Kopplungselements als Ösen kann das Kopplungsmittel auf einfache Weise durch diese Ösen durchgeführt und bei Bedarf wieder entfernt werden. Das Kopplungsmittel ist dabei nicht an den Ösen fixiert, sondern kann sich in den Ösen bewegen. Hierdurch wird ein Spiel zwischen den Käfigsegmenten, und damit den Wälzkörpern, und eine Bewegung der Käfigsegmente zueinander nicht eingeschränkt. Alternativ können die Ösen auch als offene Haken oder Laschen ausgebildet sein, in die das Kopplungsmittel einhängbar oder einklipsbar oder einschnappbar ist.

Gemäß einem weiteren Aspekt wird ein Wälzlagerkäfig, insbesondere für Großwälzlager, mit einer Mehrzahl von Käfigsegmenten, wie voranstehend beschrieben, vorgeschlagen. Dabei kann eine Mehrzahl von Käfigsegmenten über ein Kopplungselement zumindest zeitweise verbindbar sein. Dabei kann beispielsweise jeder zweite Wälzkörper in einem Käfigsegment geführt werden. Alternativ kann auch ein Käfigsegment für jeweils einen Wälzkörper vorgesehen sein. Beispielsweise kann der Außendurchmesser des Wälzlagerkäfigs mehr als 1200mm betragen.

Gemäß noch einem weiteren Aspekt wird ein Wälzlager, insbesondere ein Rollenlager, mit mindestens einem Innenring und mindestens einem Außenring, wobei zwischen dem Innenring und dem Außenring Wälzkörper angeordnet sind, wobei die Wälzkörper durch einen oben beschriebenen Wälzlagerkäfig gehalten sind.

Weitere Vorteile und vorteilhafte Ausführungsformen sind in der Beschreibung, den Zeichnungen und den Ansprüchen angegeben. Dabei sind insbesondere die in der Beschreibung und in den Zeichnungen angegebenen Kombinationen der Merkmale rein exemplarisch, so dass die Merkmale auch einzeln oder anders kombiniert vorliegen können.

Im Folgenden soll die Erfindung anhand von in den Zeichnungen dargestellten Ausführungsbeispielen näher beschrieben werden. Dabei sind die Ausführungsbeispiele und die in den Ausführungsbeispielen gezeigten Kombinationen rein exemplarisch und sollen nicht den Schutzbereich der Erfindung festlegen. Dieser wird allein durch die anhängigen Ansprüche definiert.

Es zeigen:
- Fig. 1:: eine Draufsicht auf ein Käfigsegment gemäß einer ersten Ausführungsform;
- Fig. 2:: eine Schnittansicht durch das Käfigsegment der Fig. 1;
- Fig. 3:: eine perspektivische partielle Explosionsansicht des Käfigsegments der Fig. 1;
- Fig. 4:: eine perspektivische Ansicht eines Details des Käfigsegments;
- Fig. 5:: eine perspektivische Ansicht eines Bereiches eines Käfigsegments gemäß einer zweiten Ausführungsform;
- Fig. 6:: eine Explosionsansicht eines Wälzlagerkäfigs gemäß einer dritten Ausführungsform; und
- Fig. 7:: eine perspektivische Ansicht eines Details eines Wälzlagerkäfigs gemäß einer ersten Ausführungsform.

Im Folgenden werden gleiche oder funktionell gleichwirkende Elemente mit denselben Bezugszeichen gekennzeichnet.

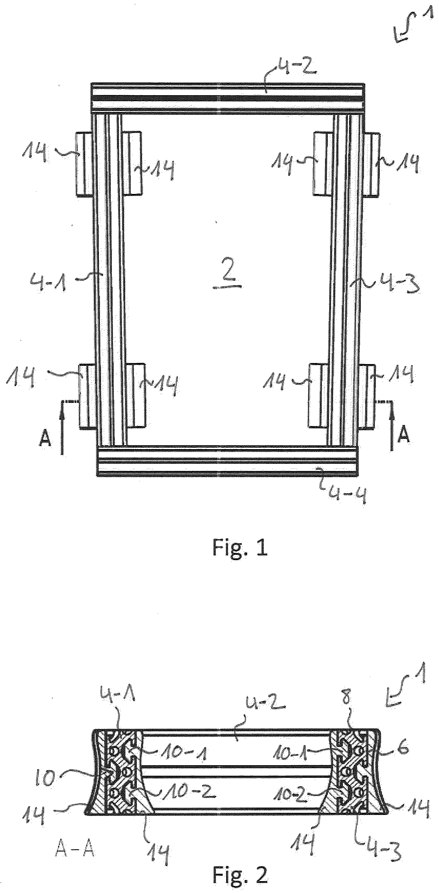

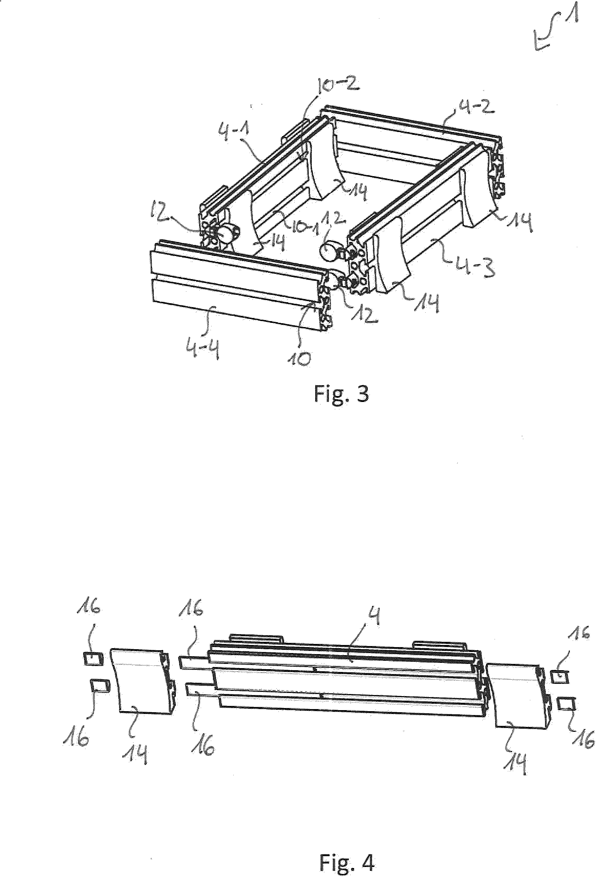

Mit Bezug auf die Fig. 1 bis 3 wird ein Käfigsegment 1 gemäß einer ersten Ausführungsform gezeigt. Die Fig. 1 zeigt eine Draufsicht auf das Käfigsegment 1, die Fig.2 zeigt einen Schnitt entlang der Linie A-A und die Fig. 3 zeigt eine perspektivische Explosionsansicht des Käfigsegments der Fig. 1.

Das Käfigsegment 1 umfasst vier Seitenelemente 4-1, 4-2, 4-3, 4-4, die zusammen eine taschenförmige Aufnahme 2 bilden, die dazu eingerichtet ist, zumindest einen Wälzkörper aufzunehmen. Dabei sind die Seitenelemente 4-1, 4-2, 4-3, 4-4 aus einem Profilhalbzeug hergestellt, das bevorzugt aus Metall, insbesondere aus Leichtmetall, zum Beispiel Aluminium, hergestellt ist.

Bei der in den Fig. 1 bis 3 gezeigten Ausführungsform haben die Seitenelemente 4-1, 4-2, 4-3, 4-4 jeweils die gleiche Form mit einem im Wesentlichen rechteckigen Querschnitt mit zwei langen Seiten 6 und zwei kurzen Seiten 8. Alternativ können auch Seitenelemente 4 eingesetzt werden, die eine andere Querschnittsform, wie beispielsweise eine quadratische Form, eine dreieckige Form, etc., haben.

Ferner ist zumindest eine Fläche des Seitenelemente 4 mit zumindest einer längserstreckenden Ausnehmung 10 versehen, wobei die Ausnehmung als Schiene ausgebildet ist, so dass ein Element in die Ausnehmung einschiebar ist. Weiterhin ist die Ausnehmung zur Fläche hin verengt und ist zum Boden der Ausnehmung hin breiter. Insbesondere sind an einer Fläche eines jeweiligen Seitenelemente 4-1, 4-2, 4-3, 4-4 zwei längserstreckende Ausnehmungen 10-1, 10-2 vorgesehen. Alternativ können aber auch Seitenelemente 4-1, 4-2, 4-3, 4-4 aus einem Profilhalbzeug verwendet werden, die mehr oder weniger längserstreckende Ausnehmungen 10 haben.

Die jeweiligen Seitenelemente 4-1, 4-2, 4-3, 4-4 sind über entsprechende Verbindungselemente 12 (Fig. 3) verbunden, um die taschenförmige Aufnahme 2 zu bilden. Dabei sind die Verbindungselemente 12 dazu ausgelegt, in zumindest eine der längserstreckenden Ausnehmungen 10 einschiebbar zu sein und an dem jeweiligen Seitenelementen 4 mittels eines Befestigungsmittels (nicht gezeigt) befestigt zu werden. Je nach Anforderungen an das Käfigsegment 1 kann das Befestigungsmittel eine formschlüssige, eine kraftschlüssige oder eine stoffschlüssige Verbindung sein. Ferner können die Verbindungselemente 12 dazu ausgelegt sein, zwei Seitenelemente 4 aus Profilhalbzeug in einem im Wesentlichen rechten Winkel, beispielsweise wenn der aufzunehmende Wälzkörper eine Zylinderrolle ist, oder in einem von 90 Grad verschiedenen Winkel zu verbinden, beispielsweise wenn der aufzunehmende Wälzkörper eine Kegelrolle ist.

Ferner sind an den Seitenelementen 4-1 und 4-3 jeweils zwei Halteelement 14 für Wälzkörper an der der Aufnahme 2 zugewandten Seite und zwei Halteelemente 14 an der der Aufnahme 2 abgewandten Seite vorgesehen. Die Halteelemente 14 sind dazu ausgelegt, einen Wälzkörper in der Aufnahme zu halten. Dabei sind die Halteelemente 14 aus dem gleichen Material wie die Seitenelemente 4-1 bis 4-4 hergestellt. Alternativ können die Halteelemente 14 aber auch aus einem anderen Material, wie beispielsweise Kunststoff, hergestellt sein. Außerdem können die die Halteelemente 14 mit einer Profilierung und/oder Texturen versehen sein, um beispielsweise Schmiermittel besser halten zu können, so dass eine Schmierung der Wälzkörper verbessert werden kann.

Fig. 4 zeigt eine Möglichkeit wie das Halteelement 14 an dem Element 4 befestigt werden kann. Dazu werden die Halteelemente 14 in zumindest eine der an der entsprechenden Fläche des jeweiligen Seitenelements 4-1, 4-2, 4-3, 4-4 vorgesehene längserstreckende Ausnehmung 10 geschoben, wobei zwischen den jeweiligen Halteelemente 14 und zwischen den Verbindungselementen 12 und Halteelementen 14 ein Distanzstück 16 eingesetzt sind. Dies ermöglicht, die Verbindungselemente 12 zu verwenden, um über die Distanzstücke 16 die Halteelemente 14 zu klemmen und dadurch in Position zu halten. Durch Änderung der Positionierung des Halteelements 14 an dem jeweiligen Seitenelement 4-1, 4-3 kann ein Endspiel im Lager, das zum Beispiel durch eine Toleranzaddierung auftreten kann, ausgeglichen werden, indem das Halteelement 14 in der axialen Richtung, d.h. in Richtung der Seitenelemente 4-2, 4-4 verschoben wird. Dies kann beispielsweise durch Distanzstücke 16 mit unterschiedlichen Längen erreicht werden.

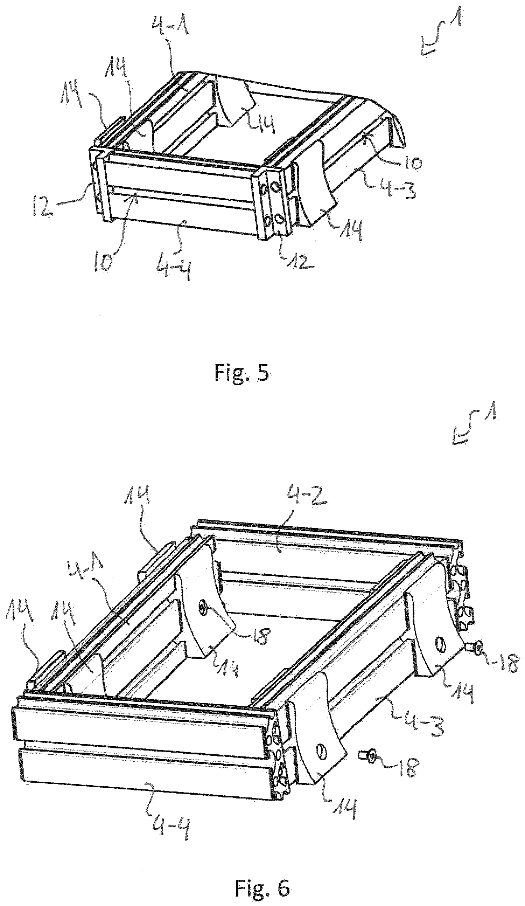

Fig. 5 zeigt eine perspektivische eines Details eines Käfigsegments 1 gemäß einer zweiten Ausführungsform. Das Käfigsegment der Fig. 4 unterscheidet sich von dem Käfigsegment 1 der Fig. 1 bis 3 durch ein winklig ausgestaltetes Verbindungselement 12, das im Unterschied zu dem Verbindungselement, das in der Fig. 3 zu sehen ist, nicht in die längserstreckende Ausnehmung 10 eingeschoben wird, sondern von außen auf die Enden der Elemente 4 aufgeschraubt werden kann, um das Käfigsegment 1 zu bilden.

Fig. 6 zeigt eine weitere Ausführungsform des Käfigsegments 1. Bei dem in der Fig. 6 gezeigten Käfigsegment 1 sind die Halteelemente 14 mittels einer Schraube 18 an dem Seitenelemente 4, insbesondere lösbar, befestigt. Dadurch kann vorteilhafterweise ermöglicht werden, die Halteelemente 14 zur Wartung herauszunehmen oder im Falle eines Verschleißes leicht bei der Wartung auszutauschen.

In voranstehend beschriebenen Fig. 1 bis 6 sind jeweils Halteelemente 14 als Beispiele für Elemente gezeigt, die an den Seitenelemente 4 angebracht werden können. Allerdings ist die Erfindung nicht auf Halteelemente für Wälzkörper beschränkt. Es ist ebenfalls möglich, andere Arten von Elementen an dem Käfigsegment 1 mittels der beschriebenen Befestigungsmöglichkeiten anzubringen. Beispielsweise kann ein Element angebracht werden, dass dazu geeignet ist, als ein Führungselemente für das Käfigsegment zu dienen. Dafür kann ein solches Führungselement dazu ausgebildet sein, beispielsweise mit einem Wälzkörper, einer Lagerlaufbahn und/oder einem Führungsbord zusammenzuwirken, um das Käfigsegment zu führen. Je nach Aufgabe des angebrachten Elements kann dieses an einer entsprechenden Position an dem Käfigsegment befestigt werden. Beispielsweise kann das Element an einer der Aufnahme 2 zugewandten Fläche und/oder abgewandten Fläche des Seitenelements 4 angebracht sein, wie in Fig. 1 bis 6 für ein Halteelement gezeigt ist. Weiterhin kann das Element auch an einer der Laufbahn und/oder dem Bord zugewandten Fläche des Seitenelements angebracht sein. Ferner kann ebenfalls ein Element vorgesehen sein, das als Kopplungselement ausgebildet ist und mit einem Kopplungsmittel zusammenwirkt, um das Käfigsegment mit zumindest einem weiteren Käfigsegment zu verbinden. Dadurch können beispielsweise mehrere Käfigsegmente zu einem Wälzlagerkäfig verbunden werden.

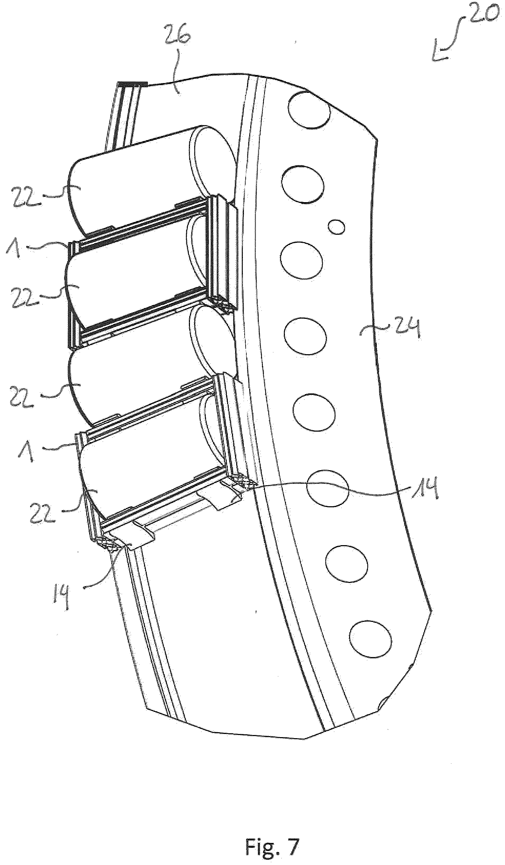

Fig. 7 zeigt eine perspektivische Ansicht eines Ausschnitts eines Wälzlagerkäfigs 20 gemäß einer ersten Ausführungsform. Bevorzugt kann der Wälzlagerkäfig 20 bei Großwälzlagern mit einem Durchmesser von mehr als 1 Meter eingesetzt werden. Der Wälzlagerkäfig 20 hat mehrere Käfigsegmente 1, wie voranstehend beschrieben, und mehrere Halteelement 14, wobei die Halteelemente 14, wie beispielsweise in der Fig. 1 gezeigt ist, sowohl an einer der Aufnahme 2 zugewandten Fläche des Seitenelements 4 als auch an einer der Aufnahme 2 abgewandten Fläche des Seitenelements 4 angebracht sind. Daher wird bei dem Wälzlagerkäfig 20 jeder zweite Wälzkörper 22 in einer Aufnahme 2 des Käfigsegments 1 geführt, während die andere Hälfte der Wälzkörper 22 jeweils zwischen zwei Käfigsegmenten 1 geführt werden. Alternativ kann auch ein Käfigsegment für jeweils einen Wälzkörper vorgesehen sein. Die Wälzkörper 22 rollen auf einer Innenlaufbahn 26 eines Innenrings 24 und auf der Außenlaufbahn eines Außenrings (nicht gezeigt) eines Wälzlagers ab, um eine relative Rotation des Innenrings und des Außenrings zu ermöglichen.

Die Verwendung von Profilhalbzeug zur Herstellung des Käfigsegments 1 ermöglicht die schnelle und kostengünstige Bereitstellung eines Wälzlagerkäfigs, da Profilhalbzeug einfach und kostengünstig als Meterware erworben werden und auf das gewünschte Maß abgelängt werden kann. Dadurch kann auf eine aufwendige maschinelle Bearbeitung, wie beispielsweise Schneiden und Biegen und insbesondere auf ein zerspanendes Bearbeitungsverfahren, verzichtet werden. Dadurch kann das Käfigsegment 1 mit einem geringen Materialeinsatz und/oder einem hohen Materialausnutzungsgrad und damit kostengünstig, insbesondere auch bei kleinen Stückzahlen, hergestellt werden.

Die Verwendung von Profilhalbzeug hat auch den Vorteil, dass die einzelnen Elemente 4, 14, aus denen das Käfigelement 1 zusammengesetzt ist, insbesondere in der Art und Weise wie sie miteinander verbindbar sind, standardisierbar sind, so dass das Käfigsegment einfach für verschiedene Arten anpassbar ist. Dies ermöglicht auch, ein Baukastenprinzip für Käfigsegmente 1 bereitzustellen, aus dem jedes Käfigsegment 1 individuell zusammengesellt werden kann. Dies ist insbesondere bei kleinen Stückzahlen vorteilhaft. Außerdem kann durch die Verwendung eines Baukastenprinzips für Käfigsegmente 1, eine Zeit, die bis zur Marktreife eines Käfigsegments 1, eines Wälzlagerkäfigs 20 und/oder eines Wälzlagers benötigt werden, reduziert werden.

### Bezugszeichenliste

- 1: Käfigsegment
- 2: Aufnahme
- 4: Element
- 6: Lange Seite
- 8: Kurze Seite
- 10: Ausnehmung
- 12: Verbindungselement
- 14: Halteelement
- 16: Distanzstück
- 18: Schraube
- 20: Wälzlagerkäfig
- 22: Wälzkörper
- 24: Innenring
- 26: Innenlaufbahn

## Patentansprüche

1. Käfigsegment (1) für einen Wälzlagerkäfig (20), insbesondere für Großwälzlager, insbesondere ein Rollenlager, mit einer taschenförmigen Aufnahme (2) zur Aufnahme eines Wälzkörpers (22), wobei die Aufnahme (2) auf zumindest einer Seite mit einem Profilhalbzeug begrenzt ist, wobei zumindest ein Element vorgesehen ist, das dazu ausgelegt ist, an dem Profilhalbzeug lösbar befestigbar zu sein,
**dadurch gekennzeichnet, dass** das Element zumindest ein Führungselement ist, das dazu ausgebildet ist, das Käfigsegment auf einer Wälzkörperlaufbahn und/oder an einem Bord zu führen, oder zumindest ein Kopplungselement ist, das dazu ausgebildet ist, mit einem Kopplungsmittel zusammenzuwirken, um das Käfigsegment mit zumindest einem weiteren Käfigsegment zu verbinden.

2. Käfigsegment (1) gemäß Anspruch 1, wobei das Profilhalbzeug zumindest ein erstes Seitenelement (4-1, 4-2, 4-3, 4-4) und ein zweites Seitenelement (4-1, 4-2, 4-3, 4-4) aufweist, wobei ein Verbindungselement (12) vorgesehen ist, das dazu ausgelegt ist, das erste Seitenelement (4-1, 4-2, 4-3, 4-4) und das zweite Seitenelement (4-1, 4-2, 4-3, 4-4) miteinander zu verbinden.

3. Käfigsegment (1) gemäß Anspruch 1 oder 2, wobei die Aufnahme (2) vollständig aus einem Profilhalbzeug gebildet ist.

4. Käfigsegment (1) gemäß einem der vorherigen Ansprüche, wobei das Profilhalbzeug zumindest eine sich längserstreckende Ausnehmung (10) hat.

5. Käfigsegment (1) gemäß Anspruch 1 wobei das Element (14) an einer der Aufnahme (2) zugewandten Seite und/oder abgewandten Seite des Käfigsegments (1) und/oder an einer der Drehachse des Wälzlagerkäfigs zugewandten und/oder abgewandten Seite des Käfigsegments (1) vorgesehen ist.

6. Käfigsegment (1) gemäß einem der Ansprüche 1 oder 5 wobei das Element (14) mittels der zumindest einen längserstreckenden Ausnehmung (10) an dem Profilhalbzeug befestigbar ist.

7. Käfigsegment (1) gemäß einem der Ansprüche 1 oder 5 bis 6, wobei das zumindest eine Element (14) mittels zumindest eines Befestigungsmittels (16, 18) an dem Profilhalbzeug befestigbar ist.

8. Käfigsegment (1) gemäß nach Anspruch 7, wobei das Befestigungsmittel (16, 18) ein Distanzstück (16), das in die zumindest eine längserstreckende Ausnehmung (10) des Profilhalbzeugs einsetzbar ist, und/oder eine Schraube (18) ist.

9. Käfigsegment (1) gemäß einem der Ansprüche 1 oder 5 bis 8, wobei das Element (14) ein Halteelement (14) für einen Wälzkörper (22) ist, das dazu ausgebildet ist, den Wälzkörper (22) zu halten, und/oder zumindest ein Führungselement ist, das dazu ausgebildet ist, das Käfigsegment (1) auf einer Wälzkörperlaufbahn (26) und/oder an einem Bord und/oder an einem Wälzkörper (22) zu führen, und/oder zumindest ein Kopplungselement ist, das dazu ausgebildet ist, mit einem Kopplungsmittel zusammenzuwirken, um das Käfigsegment (1) mit zumindest einem weiteren Käfigsegment (1) zu verbinden.

10. Käfigsegment (1) gemäß einem der Ansprüche 1 bis 9, wobei das Profilhalbzeug aus Metall, insbesondere aus Leichtmetall, bevorzugt aus Aluminium, hergestellt ist.

11. Wälzlagerkäfig (20) mit einer Mehrzahl von Käfigsegmenten (1) nach einem der Ansprüche 1 bis 10

12. Wälzlager, insbesondere Rollenlager, mit mindestens einem Innenring (24) und mindestens einem Außenring, wobei zwischen dem Innenring (24) und dem Außenring Wälzkörper (22) angeordnet sind, wobei die Wälzkörper (22) durch einen Wälzlagerkäfig (20) nach Anspruch 11 gehalten sind.

## Claims

1. Cage segment (1) for a rolling-bearing cage (20), in particular for slewing bearings, in particular a roller bearing, having a pocket-shaped receptacle (2) for accommodating a rolling body (22), wherein the receptacle (2) is delimited on at least one side by a semi-finished profile, wherein provision is made of at least one element which is configured to be releasably fastenable to the semi-finished profile,
**characterized in that** the element is at least one guide element which is configured to guide the cage segment on a rolling-body raceway and/or on a rim, or is at least one coupling element which is configured to interact with a coupling means so as to connect the cage segment to at least one further cage segment.

2. Cage segment (1) according to Claim 1, wherein the semi-finished profile has at least a first side element (4-1, 4-2, 4-3, 4-4) and a second side element (4-1, 4-2, 4-3, 4-4), wherein provision is made of a connecting element (12) which is configured to connect the first side element (4-1, 4-2, 4-3, 4-4) and the second side element (4-1, 4-2, 4-3, 4-4) to one another.

3. Cage segment (1) according to Claim 1 or 2, wherein the receptacle (2) is formed entirely from a semi-finished profile.

4. Cage segment (1) according to one of the preceding claims, wherein the semi-finished profile has at least one longitudinally extending recess (10).

5. Cage segment (1) according to Claim 1, wherein the element (14) is provided on a side of the cage segment (1) that faces towards and/or on a side thereof that faces away from the receptacle (2) and/or on a side of the cage segment (1) that faces towards and/or faces away from the axis of rotation of the rolling-bearing cage.

6. Cage segment (1) according to either of Claims 1 and 5, wherein the element (14) is fastenable to the semi-finished profile by means of the at least one longitudinally extending recess (10).

7. Cage segment (1) according to one of Claims 1 or 5 to 6, wherein the at least one element (14) is fastenable to the semi-finished profile by means of at least one fastening means (16, 18).

8. Cage segment (1) according to Claim 7, wherein the fastening means (16, 18) is a spacer (16) which is insertable into the at least one longitudinally extending recess (10) of the semi-finished profile, and/or is a screw (18).

9. Cage segment (1) according to one of Claims 1 or 5 to 8, wherein the element (14) is a holding element (14) for a rolling body (22), which is configured to hold the rolling body (22), and/or is at least one guide element which is configured to guide the cage segment (1) on a rolling-body raceway (26) and/or on a rim and/or on a rolling body (22), and/or is at least one coupling element which is configured to interact with a coupling means so as to connect the cage segment (1) to at least one further cage segment (1).

10. Cage segment (1) according to one of Claims 1 to 9, wherein the semi-finished profile is produced from metal, in particular from lightweight metal, preferably from aluminium.

11. Rolling-bearing cage (20) having a plurality of cage segments (1) according to one of Claims 1 to 10.

12. Rolling bearing, in particular roller bearing, having at least one inner ring (24) and at least one outer ring, wherein rolling bodies (22) are arranged between the inner ring (24) and the outer ring, wherein the rolling bodies (22) are held by a rolling-bearing cage (20) according to Claim 11.

## Revendications

1. Segment de cage (1) pour une cage de palier de roulement (20), notamment pour des paliers à roulement de grande taille, notamment un roulement à rouleaux, avec un logement en forme de poche (2) destiné à recevoir un corps de roulement (22), le logement (2) étant délimité sur au moins un côté par un profilé semi-fini, au moins un élément étant prévu, qui est conçu pour pouvoir être fixé de manière amovible au profilé semi-fini, **caractérisé en ce que** l'élément est au moins un élément de contact qui est réalisé pour guider le segment de cage sur une piste de corps de roulement et/ou sur un bord, ou au moins un élément d'accouplement qui est réalisé pour coopérer avec un moyen d'accouplement afin de relier le segment de cage à au moins un autre segment de cage.

2. Segment de cage (1) selon la revendication 1, dans lequel le profilé semi-fini présente au moins un premier élément latéral (4-1, 4-2, 4-3, 4-4) et un deuxième élément latéral (4-1, 4-2, 4-3, 4-4), un élément de liaison (12) étant prévu, qui est conçu pour relier entre eux le premier élément latéral (4-1, 4-2, 4-3, 4-4) et le deuxième élément latéral (4-1, 4-2, 4-3, 4-4).

3. Segment de cage (1) selon la revendication 1 ou 2, dans lequel le logement (2) est entièrement formé à partir d'un profilé semi-fini.

4. Segment de cage (1) selon l'une quelconque des revendications précédentes, dans lequel le profilé semi-fini présente au moins un évidement qui s'étend longitudinalement (10).

5. Segment de cage (1) selon la revendication 1, dans lequel l'élément (14) est prévu sur un côté du segment de cage (1) tourné vers le logement (2) et/ou détourné de celui-ci et/ou sur un côté du segment de cage (1) tourné vers l'axe de rotation de la cage de palier de roulement et/ou détourné de celui-ci.

6. Segment de cage (1) selon l'une quelconque des revendications 1 ou 5, dans lequel l'élément (14) peut être fixé au profilé semi-fini au moyen d'au moins un évidement qui s'étend longitudinalement (10).

7. Segment de cage (1) selon l'une quelconque des revendications 1 ou 5 à 6, dans lequel l'au moins un élément (14) peut être fixé au profilé semi-fini au moyen d'au moins un moyen de fixation (16, 18).

8. Segment de cage (1) selon la revendication 7, dans lequel le moyen de fixation (16, 18) est une entretoise (16) pouvant être insérée dans au moins un évidement qui s'étend longitudinalement (10) du profilé semi-fini et/ou une vis (18).

9. Segment de cage (1) selon l'une quelconque des revendications 1 ou 5 à 8, dans lequel l'élément (14) est un élément de retenue (14) pour un corps de roulement (22), qui est réalisé pour retenir le corps de roulement (22), et/ou au moins un élément de guidage réalisé pour guider le segment de cage (1) sur une piste de corps de roulement (26) et/ou sur un bord et/ou sur un corps de roulement (22), et/ou au moins un élément d'accouplement qui est réalisé pour coopérer avec un moyen d'accouplement afin de relier le segment de cage (1) à au moins un autre segment de cage (1).

10. Segment de cage (1) selon l'une quelconque des revendications 1 à 9, dans lequel le profilé semi-fini est fabriqué en métal, notamment en métal léger, de préférence en aluminium.

11. Cage de palier à roulement (20) comportant une pluralité de segments de cage (1) selon l'une quelconque des revendications 1 à 10.

12. Palier à roulement, notamment roulement à rouleaux, avec au moins une bague intérieure (24) et au moins une bague extérieure, des corps de roulement (22) étant disposés entre la bague intérieure (24) et la bague extérieure, les corps de roulement (22) étant maintenus par une cage (20) de palier à roulement selon la revendication 11.
